# EUROPÄISCHE PATENTSCHRIFT

(11) **EP 3 908 463 B1**
(45) Veröffentlichungstag und Bekanntmachung des Hinweises auf die Patenterteilung: **13.08.2025**
(21) Anmeldenummer: 19829565.1
(22) Anmeldetag: 19.12.2019
(51) Int. Cl.: B32B 41/00, B32B 37/12, B32B 37/06, B32B 37/08

(54) **VERFAHREN UND VORRICHTUNG ZUM VERKLEBEN VON FOLIENFÖRMIGEN SUBSTRATEN**
METHOD AND DEVICE FOR ADHESIVELY BONDING SUBSTRATES IN FILM FORM
PROCÉDÉ ET DISPOSITIF DE COLLAGE DE SUBSTRATS EN FORME DE FILM

(30) Priorität: 11.01.2019 EP 19151375
(43) Veröffentlichungstag der Anmeldung: 17.11.2021
(73) Patentinhaber: Henkel AG & Co. KGaA, 40589 Düsseldorf (DE)
(72) Erfinder: KINZELMANN, Hans-Georg, 50259 Pulheim (DE); GIERLINGS, Michael, 41564 Kaarst (DE)
(86) Internationale Anmeldenummer: PCT/EP2019/086391
(87) Internationale Veröffentlichungsnummer: WO 2020/144043

(56) Entgegenhaltungen:
- EP-A1- 3 526 042
- EP-B1- 3 526 042
- US-A- 5 582 669
- US-A1- 2011 041 981
- US-A1- 2018 162 113

## Beschreibung

Die vorliegende Erfindung betrifft ein Verfahren zum Verkleben von folienförmigen Substraten, wobei eines der Substrate eine thermoplastische Oberfläche aufweist, die vor dem Verkleben in einen erweichten Zustand überführt wird, und wobei die der thermoplastischen Oberfläche gegenüberliegende Oberfläche dieses Substrats unter Verwendung einer Kühlwalze gekühlt wird. Weiterhin betrifft die vorliegende Erfindung eine Vorrichtung zur Durchführung des erfindungsgemäßen Verfahrens sowie einen Verbundkörper, der mittels des erfindungsgemäßen Verfahrens erhältlich ist.

Dem Fachmann sind unterschiedlichste Verfahren zum Verkleben von folienförmigen Substraten bekannt, wobei zum Verbinden der Substrate verschiedenste Klebstoffe eingesetzt werden können. In der Regel wird dabei der Klebstoff auf eine Oberfläche eines ersten Substrats aufgetragen und die Substrate dann unter Druck miteinander in Kontakt gebracht. Hierbei stellt sich allerdings das Problem, dass, um eine ausreichende Verbindung der beiden Substrate zu gewährleisten, der Klebstoff die Oberfläche des Substrats möglichst vollflächig benetzen sollte, auch um gewisse Unebenheiten in der Oberfläche der Substrate auszugleichen und die Bildung von Luftblasen während des Laminierens zu vermeiden. Insofern sind die benötigten Klebstoffmengen relativ hoch, um eine Delaminierung des Produkts zu verhindern. Der Einsatz der benötigten Klebstoffmengen bringt die bekannten Nachteile, wie die übermäßige Beanspruchung von Ressourcen und eine aufwendige Entsorgung und Aufbereitung des anfallenden Abfalls, mit sich. Angesichts der zunehmenden Knappheit der Ressourcen und einer steigenden Belastung der Umwelt besteht daher der Bedarf nach industriellen Verfahren, die einen verantwortungsvollen und nachhaltigen Umgang mit den Ressourcen und der Umwelt erlauben. Angesichts der aufgeführten Nachteile scheint die Reduktion der eingesetzten Klebstoffmenge eine naheliegende Lösung zu sein. Eine Reduktion der Klebstoffmenge per se hat sich in ersten Versuchen als nicht praktikabel erwiesen, da zum einen die Produkte eine steigende Tendenz zur Delaminierung zeigten und zum anderen die Bildung von Luftblasen während des Laminierens nicht mehr ausgeschlossen werden konnte, was insbesondere bei transparenten Produkten zu einer starken Beeinträchtigung der mechanischen und optischen Eigenschaften führt. Um trotz einer geringen Klebstoffmenge optisch und mechanisch belastbare Produkte zu erhalten, war es daher nötig, Substrate mit glatten Oberflächen zu verwenden.

Ein Ansatz, die Oberfläche der Substrate zu glätten, ist die Verwendung eines thermoplastischen Substrats, dessen Oberfläche vor dem Verkleben durch Wärmeeinwirkung geglättet werden kann.

Allerdings bringt das Erwärmen der Oberfläche des Substrats, um diese zu glätten, den Nachteil mit sich, dass sich das erwärmte Substrat verformt und dehnt, so dass die Bahnführung des Substrats während der Laminierung erschwert wird und der erhaltene Verbundkörper nicht mehr die gewünschte Beschaffenheit aufweist. Der Stand der Technik schlägt verschiedene Ansätze vor, wie dem Problem der Verformung des Substrats begegnet werden kann.

US 4,069,081 beschreibt ein Laminierungsverfahren, bei dem ein Schutzfilm auf ein relativ flexibles Substratdokument aufgebracht wird und bei dem verhindert wird, dass sich das erhaltene Produkt wellt. Dazu wird ein Verbundfilm bereitgestellt, der einen Schutzfilm mit einem robusten, transparenten und abriebfesten Harz und eine innere Schicht aus einem transparenten thermoplastischen Verbundharz aufweist, wobei dem Verbundharz eine gewisse Anzahl an Strahlungswärme blockierenden Pigmenten zugegeben wird. Die Schicht aus Verbundharz wird derart erwärmt, dass die Hitze direkt auf das Verbundharz fällt und der Verbundfilm wird auf das Substrat laminiert, indem der Verbundfilm und das Substrat direkt nach dem Erwärmen zwischen einer ersten und einer zweiten Presswalze hindurchgeführt werden, wobei die klebende Oberfläche des Films mit einer inneren Oberfläche des Substrats in Kontakt gebracht wird, während die äußere Oberfläche des Film der ersten Presswalze und die äußere Oberfläche des Substrats der zweiten Presswalze zugewandt ist.

US 2018/0162113 betrifft die Herstellung eines laminierten Films, bei dem in einem ersten Beschichtungsschritt eine Beschichtung auf einen ersten Film aufgebracht wird, wobei die Beschichtung ein strahlenhärtendes Harz umfasst, in einem Laminierungsschritt ein zweiter Film auf die Beschichtung laminiert wird und in einem Aushärtungsschritt, während dessen der beschichtete Film zwischen dem ersten und dem zweiten Film geführt wird, eine ausgehärtete Schicht gebildet wird. Die Schritte werden jeweils in einem Zustand durchgeführt, in dem der erste Film um eine Stützwalze geführt wird. Die Stützwalze kann dabei eine Temperaturkontrolleinheit zum Steuern der Oberflächentemperatur der Walze aufweisen.

EP3526042 A1 beschreibt eine Vorrichtung zum Kaschieren eines Substrates (4) mit einem thermoplastischen Beschichtungsmaterial (2), mit einer IR-Heizvorrichtung (3) zum Anschmelzen einer Oberfläche des Beschichtungsmaterials, einer gegenüberliegenden Kühleinrichtung (1), welche die der gegenüberliegenden Oberfläche des Beschichtungsmaterials (2) aktiv kühlt, und mindestens einer Presserollenanordnung (5), welche die Substratbahn (4) und das Beschichtungsmaterial (2) zur Herstellung einer Schmelzklebeverbindung zusammenpresst. Um Unregelmäßigkeiten in dem fertigen Produkt zu vermeiden, schlägt EP3526042 vor, dass die Kühleinrichtung als drehend angetriebene Kühlwalze (1) ausgebildet ist, im deren Umfang herum aufeinanderfolgend angeordnet sind: - eine Zuführungseinrichtung (2a) für das thermoplastische Beschichtungsmaterial (2); - eine oder mehrere IR-Heizstrahler (3) für die Erwärmung der Oberfläche des auf der Kühlwalze (1) aufliegenden thermoplastischen Beschichtungsmaterials (2); - eine Zuführungseinrichtung (4a) für die Substratbahn (4); - eine oder mehrere Presserollen (5) zum Anpressen der Substratbahn (4); gegen das Beschichtungsmaterial (2); - und eine Abführeinrichtung (6a) für das kaschierte Produkt (6). EP3526042 A1 fällt unter Artikel 54 (3) EPÜ.

WO 2016/026918 beschreibt ein Verfahren zum Verkleben von zwei Substraten, wobei ein erstes folienförmiges Substrat, das mindestens einen Thermoplast enthält mittels eines stützenden Förderbands durch eine Erwärmungszone, in der das Substrat so erwärmt wird, dass die Oberfläche des Substrats in einen erweichten Zustand überführt wird, transportiert wird, das Substrat mit einem zweiten Substrats während und/oder unmittelbar nach dem Erwärmen zusammengebracht wird, wobei das zweite Substrat mit einem Klebstoff mit einem Schichtgewicht von 0,01 bis 4 g/m² beschichtet ist, und die beiden Substrate unter Druck miteinander verklebt werden. Um zu gewährleisten, dass nur die zu verklebende Oberfläche des Substrats in einen erwärmten Zustand überführt wird, wird vorgeschlagen, die nicht zu verklebende Oberfläche zu kühlen. Das beschriebene Verfahren weist allerdings den Nachteil auf, dass durch die Verwendung des Förderbands nur eine indirekte Kühlung des Substrats möglich ist, was zu einem erhöhten Energieaufwand führt. Weiterhin besteht für das Förderband selbst nur eine limitierte Materialauswahl, da es sich selbst nicht erwärmen darf, um eine Dehnung des Förderbands in Zugrichtung zu verhindern.

US 5,582,669 beschreibt ein Verfahren und eine Vorrichtung zum Aufbringen eines Schutzüberzugs auf ein Bildträgermedium. Eine Heizwalze und eine aktiv gekühlte Kühlwalze sind dabei so angeordnet, dass sie einen Spalt bilden, durch den der auf ein Netz aufgebrachte Schutzüberzug und das Bildträgermedium geführt werden. Durch ein Temperaturgefälle zwischen den Schichten des Netzes und des Mediums wird die Adhäsion zwischen der Oberfläche des Schutzüberzugs und dem Bild angeregt, wobei gleichzeitig übliche Probleme beim Laminieren, wie Wellen und Rollen der Substrate, vermieden werden sollen.

US 2011/041981 beschreibt eine Laminierstation zum Laminieren eines Films oder einer Materialschicht auf eine Bahn aus Pappe oder Karton, wobei die Laminierstation eine Andrückwalze und eine Kühlwalze umfasst, wobei zwischen den Walzen ein Spalt ausgebildet wird, der die Materialschicht oder den Film und die Bahn aus Pappe zusammendrückt, wobei der Film oder die Materialschicht hinter dem Spalt während eines vorgegebenen Winkelintervalls an der Kühlwalze anliegen. Als Andrückwalze wird eine Schuhpresswalze verwendet.

Die im Stand der Technik beschriebenen Verfahren weisen den Nachteil auf, dass ihre Ausführung bezüglich Material und Umsetzung dahingehend beschränkt ist, dass entweder spezielle Harze eingesetzt werden müssen oder aber aufwendige Proessaufbauten notwendig sind, um eine formstabile Laminierung von flexiblen Substraten, auch mit geringen Klebstoffmengen, zu gewährleisten. Es ist daher Aufgabe der vorliegenden Erfindung ein Verfahren zur Verfügung zu stellen, das die formstabile Laminierung von flexiblen Substraten mit geringen Klebstoffmengen erlaubt.

Es wurde überraschend gefunden, dass diese Aufgabe durch ein Verfahren gelöst wird, bei dem eine erste Oberfläche eines Substrats erwärmt wird, während die dieser Oberfläche gegenüberliegende Seite mit Hilfe einer Kühlwalze gekühlt wird. Daher ist ein erster Gegenstand der vorliegenden Erfindung ein Verfahren zum Verkleben von Substraten, umfassend
Bereitstellen eines folienförmigen ersten Substrats mit einer thermoplastischen Oberfläche;
Führen des ersten Substrats (3) um eine antreibbare Kühlwalze (1), mit der das erste Substrat (3) in Kontakt steht, wobei sich die Kühlwalze in Vorschubrichtung dreht;
Bereitstellen eines zweiten Substrats, auf dessen Oberfläche ein Klebstoff aufgetragen ist; und
Zusammenführen des ersten und des zweiten Substrats unter Druck,
wobei sich die thermoplastische Oberfläche des ersten Substrats (3) beim Zusammenführen in einem erweichten Zustand befindet, die der erweichten Oberfläche gegenüberliegende Oberfläche des ersten Substrats (3) mittels einer rotierenden Kühlwalze (1) gekühlt wird, die thermoplastische Oberfläche des ersten Substrats (3) durch Erwärmen in einen erweichten Zustand überführt wird, wobei das Erwärmen mittels wenigstens eines Heizelements (2) erfolgt, das gegenüberliegend der Kühlwalze (1) angeordnet ist, und der Abstand zwischen dem wenigstens einen Heizelement (2) und der Kühlwalze (1) variabel ist

Es wurde überraschend gefunden, dass durch Kühlung der der thermoplastischen Oberfläche gegenüberliegenden Oberfläche mittels einer Kühlwalze eine Verformung des Substrats verhindert werden kann, ohne dass eine Reduzierung der Prozessgeschwindigkeit notwendig wäre. Der Einsatz einer Kühlwalze bietet weiterhin den Vorteil, dass die Oberfläche der Walze, mit der sich die zu kühlende Oberfläche des Substrats in Kontakt befindet, direkt gekühlt werden kann, wodurch unnötige Energieverluste vermieden werden. Im Gegensatz dazu weist die Verwendung eines Förderbands, wie im Stand der Technik vorgeschlagen, den Nachteil auf, dass das Förderband selbst nur indirekt gekühlt werden kann, wodurch eine effektive Kühlung der Substratoberfläche erschwert wird.

Erweichter Zustand im Rahmen der vorliegenden Erfindung bezeichnet einen Zustand, in dem die thermoplastische Oberfläche des ersten Substrats plastisch verformt werden kann, ohne dass sich die dimensionalen Abmessungen des Substrats verändern.

Folienförmig oder Folie im Sinne der vorliegenden Erfindung bezeichnet ein in Bahnen hergestelltes, sehr dünnes Material zum Bekleben oder Verpacken, vorzugsweise hergestellt aus Metall oder Kunststoff.

Gemäß dem erfindungsgemäßen Verfahren wird die Oberfläche des ersten Substrats, die der erwärmten Oberfläche des ersten Substrats gegenüberliegt, mittels einer rotierenden Kühlwalze gekühlt, wobei das erste Substrat um die Kühlwalze geführt wird. Die Kontaktfläche zwischen der Kühlwalze und dem ersten Substrat kann dabei bedarfsweise angepasst werden. Die Kühlwalze wird aktiv angetrieben, da auf diese Weise die Gefahr minimiert werden kann, dass das Substrat während des Prozesses gedehnt wird. Daher ist die Kühlwalze eine aktiv angetriebene Kühlwalze. Besonders bevorzugt wird die Kühlwalze in Bahngeschwindigkeit betrieben, um jegliche Verformung des Substrats zu vermeiden. An das in der Kühlwalze verwendete Kühlmittel sind im Rahmen des erfindungsgemäßen Verfahrens keine besonderen Anforderungen zu stellen. In einer bevorzugten Ausführungsform wird die Kühlwalze mit einem flüssigen Kühlmittel, insbesondere Wasser, betrieben.

Das erste Substrat und das zweite Substrat werden erfindungsgemäß unter Druck zusammengeführt. Das Zusammenführen der Substrate kann dabei auf übliche, dem Fachmann bekannte, Art und Weise erfolgen, beispielsweise unter Verwendung eines Kaschierwerks. Vorzugsweise handelt es dabei um ein Kaschierwerk, das in die Kühlwalzenanordnung integriert oder separat von dieser ausgebildet ist. Das Zusammenführen der beiden Substrate erfolgt vorzugsweise durch Ausüben eines gleichmäßigen Drucks über die gesamte Breite der Substrate. In einer besonders bevorzugten Ausführungsform erfolgt das Zusammenführen der Substrate dadurch, dass das zweite Substrat mit dem auf der Kühlwalze aufliegenden ersten Substrat zusammengeführt wird. Es wurde überraschend gefunden, dass auf diese Weise die Formstabilität insbesondere des ersten Substrats gesteigert werden konnte.

Die thermoplastische Oberfläche des ersten Substrats wird durch Erwärmen in einen erweichten Zustand überführt, wobei das Erwärmen mittels wenigstens eines Heizelements erfolgt, das gegenüberliegend der Kühlwalze angeordnet ist. In einer bevorzugten Ausführungsform ist das wenigstens ein Heizelement um die Peripherie der Kühlwalze herum angeordnet. In einer bevorzugten Ausführungsform umfasst das mindestens eine Heizelement eine Reihe separater Heizelemente, vorzugsweise IR-Strahler. Die Anzahl der einzelnen Heizelemente wird dabei von dem Durchmesser der Kühlwalze bestimmt und beträgt vorzugsweise mindestens 3, weiterbevorzugt 3 bis 15, besonders bevorzugt 3 bis 10, insbesondere 3 bis 5. Die separaten Heizelemente sind in einer besonders bevorzugten Ausführungsform um die Peripherie der Kühlwalze herum angeordnet. In einer weiterhin bevorzugten Ausführungsform sind die verschiedenen Heizelemente des mindestens einen Heizelements um mindestens ein Viertel der Peripherie der Kühlwalze herum angeordnet, besonders bevorzugt um mindestens die Hälfte der Peripherie. Ganz besonders bevorzugt sind die verschiedenen Heizelemente um die ganze Peripherie der Kühlwalze herum angeordnet, wobei dem Fachmann klar ist, dass die Anordnung derart erfolgt, dass keine Beeinträchtigung des Prozessablaufs und/oder anderer Komponenten erfolgt. Es hat sich als besonders vorteilhaft erwiesen, wenn das mindestens eine Heizelement in räumlicher Nähe zu dem Punkt im Prozessverlauf angeordnet ist, an dem das erste Substrat und das zweite Substrat zusammengeführt werden, vorzugsweise mit Hilfe eines Kaschierwerks. Daher ist eine Ausführungsform besonders bevorzugt, in der das mindestens eine Heizelement in räumlicher Nähe zu dem Kaschierwerk angeordnet ist. Es wurde überraschend gefunden, dass auf diese Weise die Substratoberfläche des ersten Substrats derart in einen erweichten Zustand überführt werden kann, dass ein belastbarer Verbund zwischen dem ersten Substrat und dem zweiten Substrat erreicht wird. Dem Fachmann ist eine Reihe von Maßnahmen bekannt, wie die thermoplastische Oberfläche eines Substrats erwärmt werden kann, wie beispielsweise mittels Heißluft oder elektromagnetischer Strahlung. Als besonders vorteilhaft hat es sich erwiesen, die Erwärmung mittels IR-Strahlung vorzunehmen, da sich auf diese Weise eine überraschend homogene Erwärmung der Oberfläche realisieren ließ. Daher ist eine Ausführungsform des erfindungsgemäßen Verfahrens bevorzugt, in der die thermoplastische Oberfläche des ersten Substrats durch Erwärmung mittels IR-Strahlung in einen erweichten Zustand überführt wird.

Das erfindungsgemäße Verfahren zeichnet sich insbesondere dadurch aus, dass es trotz nur einer geringen Klebstoffmenge laminierte Substrate liefert, die sich durch eine hervorragende Verbundhaftung auszeichnen. Daher ist eine Ausführungsform bevorzugt, in der das Schichtgewicht des Klebstoffs auf der Oberfläche des zweiten Substrats weniger als 2 g/m², vorzugsweise weniger als 1 g/m², besonders bevorzugt 0,1 bis 0,7 g/m² beträgt.

Weiterhin zeichnet sich das erfindungsgemäße Verfahren dadurch aus, dass, im Gegensatz zu im Stand der Technik beschriebenen Verfahren, keine besonderen Anforderungen an den eingesetzten Klebstoff zu stellen sind. Vielmehr können herkömmliche Klebstoffe, wie sie dem Fachmann bekannt sind, eingesetzt werden. Daher ist eine Ausführungsform bevorzugt, in der der auf das zweite Substrat aufgetragene Klebstoff ausgewählt ist aus thermoplastischen Klebstoffen oder vernetzenden Klebstoffen in lösemittelhaltiger, wässriger oder lösemittelfreier Form, wobei sowohl 1-Komponentensysteme als auch 2-Komponentensysteme verwendet werden können. Besonders bevorzugt ist der Klebstoff ausgewählt aus der Gruppe bestehend aus Klebstoffen auf Basis von thermoplastischen Polymeren, wie Polyurethanen, Ethylenvinylacetat oder Polyacrylaten, lösemittelhaltigen Klebstoffen wie Acrylatklebstoffe, 1K- oder 2K-Polyurethanklebstoffen, Silan-vernetzenden Klebstoffen, reaktiven Schmelzklebstoffen, wie 1K-Polyurethanklebstoffe, Epoxyaminklebstoffe und strahlenvernetzenden Klebstoffen. Besonders bevorzugt werden Klebstoffe auf Basis von Polyurethanen, Ethylenvinylacetat oder Polyacrylaten eingesetzt. Insbesondere werden im Rahmen des vorliegenden Verfahrens Polyurethanklebstoffe verwendet.

Das erfindungsgemäße Verfahren ist besonders für das Laminieren von folienförmigen Substraten geeignet. Auch wenn als zweites Substrat nicht-folienförmige Substrate wie beispielsweise Holzwerkstoffe oder Metallbleche verwendet werden können, handelt es sich bei dem zweiten Substrat vorzugsweise ebenfalls um ein folienförmiges Substrat, das vorzugsweise ausgewählt ist aus der Gruppe bestehend aus duroplastischen oder thermoplastischen Kunststoffen, organischen Polymeren und Metallen und Metalllegierungen. So kann es sich bei dem zweiten Substrat beispielsweise um ein folienförmiges Substrat auf Basis von Aluminium oder einer Aluminiumlegierung oder um eine Kunststofffolie handeln. In einer bevorzugten Ausführungsform ist das zweite Substrat ausgewählt aus der Gruppe bestehend aus mit Polyethylen oder Polypropylen beschichtetem Aluminium, biaxial gestrecktes Polyamid, biaxial gestrecktes Polyethylenterephthalat, orientiertes Polypropylen und orientiertes Polyethylen.

Das erste Substrat zeichnet sich insbesondere durch seine thermoplastische Oberfläche aus. In einer bevorzugten Ausführungsform handelt es sich bei dem ersten Substrat um ein Substrat bestehend aus oder umfassend Polyolefine, Polyvinylchloride, Ethylencopolymere, Polyester, Polyether und/oder Polyamide. Besonders bevorzugt werden Polyethylen, Polypropylen, Poylvinylchloride oder Ethylencopolymere verwendet, insbesondere Polyethylen und Polypropylen.

Als erstes und/oder zweites Substrat können in dem erfindungsgemäßen Verfahren auch mehrschichtige Substrate eingesetzt werden, solange das erste Substrat eine thermoplastische Oberfläche und das zweite Substrat eine Oberfläche aufweist, auf die ein Klebstoff aufgetragen werden kann. Als mehrschichtige Substrate können beispielsweise mehrlagige Filme mit einer Kernlage aus einem Sauerstoffbarrierematerial verwendet werden, wobei auf gängige Sauerstoffbarrierematerialien wie Vinylidenchlorid-Copolymere mit verschiedenen Comonomeren, wie beispielsweise Vinylchlorid (VC-VDC Copolymer) oder Methylacrylat (MA-VDC Copolymer) und Polyamide und Ethylenvinylalkohol-Copolymer (EVOH) zurückgegriffen werden kann. In einer besonders bevorzugten Ausführungsform werden coextrudierte, orientierte Polypropylene und/oder coextrudierte Ethylenvinylalkoholfilme verwendet.

Vorzugsweise handelt es sich bei den verwendeten Substraten jeweils um folienförmige Substrate. Daher ist eine Ausführungsform bevorzugt, in der das erste und/oder das zweite Substrat eine Dicke von 2 bis 100 µm, vorzugsweise 4 bis 80 µm aufweisen.

Im Rahmen der vorliegenden Erfindung wurde überraschend gefunden, dass eine Verformung des ersten Substrats, insbesondere in Vorschubrichtung, dadurch verhindert werden kann, dass die der erwärmten Oberfläche gegenüberliegende Oberfläche gekühlt wird. Eine verbesserte Formstabilität des ersten Substrats konnte insbesondere dann erreicht werden, wenn das Substrat über eine Kühlwalze geführt wurde und der Temperaturunterschied zwischen der Oberfläche der Walze und der Umgebung mindestens 10 K, vorzugsweise mindestens 15 K betrug. Daher ist eine Ausführungsform des erfindungsgemäßen Verfahrens bevorzugt, in der der Temperaturunterschied zwischen der Oberfläche der Kühlwalze und der Umgebung mindestens 10 K, vorzugsweise mindestens 15 K beträgt. Dabei weist das erfindungsgemäße Verfahren den weiteren Vorteil auf, dass sich die vorteilhaften Temperaturunterschiede durch die Verwendung herkömmlicher Kühlmittel, wie beispielsweise Wasser, einstellen lassen.

Ein weiterer Gegenstand der vorliegenden Erfindung ist eine Vorrichtung zur Durchführung des erfindungsgemäßen Verfahrens, wobei die Vorrichtung folgendes aufweist:
- eine Zuführeinrichtung für ein folienförmiges erstes Substrat, wobei das Substrat eine thermoplastische Oberfläche aufweist;
- eine Zuführeinrichtung für ein zweites Substrat, auf dessen Oberfläche ein Klebstoff aufgebracht ist;
- eine rotierend antreibbare Kühlwalze, die mit dem ersten Substrat (3) in Kontakt steht und um die das erste Substrat geführt wird;
- wenigstens ein Heizelement zum Erwärmen der thermoplastischen Oberfläche des ersten Substrats, wobei das wenigstens eine Heizelement gegenüberliegend zu der Kühlwalze angeordnet ist, und
- Mittel zum Zusammenführen des ersten und des zweiten Substrats, wobei der Abstand zwischen dem wenigstens einen Heizelement (2) und der Kühlwalze (1) variabel ist.

In einer bevorzugten Ausführungsform weist die Vorrichtung mehr als ein Heizelement auf, die wenigstens teilweise um die Peripherie der Kühlwalze angeordnet sind. In einer bevorzugten Ausführungsform umfasst das mindestens eine Heizelement eine Reihe separater Heizelemente, vorzugsweise IR-Strahler. Die Anzahl der einzelnen Heizelemente wird dabei von dem Durchmesser der Kühlwalze bestimmt und beträgt vorzugsweise mindestens 3, weiterbevorzugt 3 bis 15, besonders bevorzugt 3 bis 10, insbesondere 3 bis 5. Die separaten Heizelemente sind in einer besonders bevorzugten Ausführungsform um die Peripherie der Kühlwalze herum angeordnet. In einer weiterhin bevorzugten Ausführungsform sind die verschiedenen Heizelemente des mindestens einen Heizelements um mindestens ein Viertel der Peripherie der Kühlwalze herum angeordnet, besonders bevorzugt um mindestens die Hälfte der Peripherie. Ganz besonders bevorzugt sind die verschiedenen Heizelemente um die ganze Peripherie der Kühlwalze herum angeordnet, wobei dem Fachmann klar ist, dass die Anordnung derart erfolgt, dass keine Beeinträchtigung des Prozessablaufs und/oder anderer Komponenten erfolgt. Es hat sich als besonders vorteilhaft erwiesen, wenn das mindestens eine Heizelement in räumlicher Nähe zu dem Punkt im Prozessverlauf angeordnet ist, an dem das erste Substrat und das zweite Substrat zusammengeführt werden, vorzugsweise mit Hilfe eines Kaschierwerks. Daher ist eine Ausführungsform besonders bevorzugt, in der das mindestens eine Heizelement in räumlicher Nähe zu dem Kaschierwerk angeordnet ist. Auf diese Weise kann eine homogene Erwärmung der Oberfläche des ersten Substrats während des laufenden Verfahrens sichergestellt werden, ohne dass die Bahngeschwindigkeit des Substrats verlangsamt oder in anderer Art und Weise angepasst werden müsste. Besonders bevorzugt handelt es sich bei dem mindestens einen Heizelement um ein IR-Heizelement.

Die Temperatur, die benötigt wird, um die thermoplastische Oberfläche des ersten Substrats in einen erweichten Zustand zu überführen kann je nach eingesetztem Substrat variieren. Daher ist der Abstand zwischen dem wenigstens einen Heizelement und der thermoplastischen Oberfläche des ersten Substrats variable. Das wenigstens eine Heizelement der erfindungsgemäßen Vorrichtung ist dabei vorzugsweise so angeordnet, dass der Abstand zwischen Heizelement und Kühlwalze verringert oder vergrößert werden kann. Für Ausführungsformen, in denen mehr als ein Heizelement verwendet wird, ist der Abstand zwischen dem einzelnen Heizelement und der Kühlwalze vorzugsweise individuell steuerbar.

Im Rahmen der vorliegenden Erfindung hat es sich als besonders vorteilhaft erwiesen, wenn das erste Substrat über lediglich eine Kühlwalze geführt wird, wobei die Größe und der Durchmesser der Walze den jeweiligen Anforderungen angepasst werden können, da auf diese Weise die Kühlwalze gleichzeitig als Stützwalze für das Substrat dient. Nichtsdestotrotz sind alternative Ausführungen ebenfalls bevorzugt, in denen die erfindungsgemäße Vorrichtung mehr als eine Kühlwalze aufweist, das erste Substrat also um mehr als eine Kühlwalze geführt wird.

Als Zuführeinrichtungen werden in der erfindungsgemäßen Vorrichtung vorzugsweise übliche Mittel wie Walzen und Förderbänder, insbesondere Walzen verwendet.

Die erfindungsgemäße Vorrichtung ist insbesondere für das Laminieren von folienförmigen Substraten vorgesehen. Daher ist eine Ausführungsform bevorzugt, in der die Kühlwalze Teil des Mittels zum Zusammenführen des ersten und des zweiten Substrats ist und das Mittel weiterhin über ein oder mehrere Walzen zum Anpressen des zweiten Substrats gegen das auf der Kühlwalze aufliegende erste Substrat verfügt. Auf diese Weise kann die zusätzliche Stützwirkung der Kühlwalze beim Zusammenführen der Substrate genutzt werden und eine gute Glättung der Oberfläche des ersten Substrats bei gleichzeitigem Formerhalt erzielt werden. In einer besonders bevorzugten Ausführungsform sind die Heizelemente und die Walzen zum Anpressen des zweiten Substrats jeweils über den halben Umfang der Kühlwalze angeordnet.

In einer alternativ bevorzugten Ausführungsform hat es sich als vorteilhaft erwiesen, wenn das Mittel zum Zusammenführen des ersten und des zweiten Substrats unabhängig von der Kühlwalze ausgebildet ist. Auf diese Weise ist es möglich, die Kühlwalze unabhängig von der Bahngeschwindigkeit der Substrate zu betreiben. Daher ist eine Ausführungsform der erfindungsgemäßen Vorrichtung bevorzugt, in der das Mittel zum Zusammenführen des ersten und des zweiten Substrats von der Kühlwalze unabhängig ausgebildet ist und das Mittel über ein oder mehrere Walzen zum Zusammenführen des ersten und des zweiten Substrats verfügt. Weiterhin ist in dieser Ausführungsform das Mittel zum Zusammenführen des ersten und des zweiten Substrats vorzugsweise in Prozessrichtung hinter der Kühlwalze angeordnet, wobei das Mittel weiterhin von der Kühlwalze beabstandet angeordnet ist. Der Abstand zwischen dem Mittel und der Kühlwalze sollte dabei nicht zu groß gewählt werden, um einen Wärmeverlust der thermoplastischen Oberfläche und Dehnung in Vorschubrichtung des ersten Substrats zu vermeiden. Die bevorzugte Ausführungsform ermöglicht eine variable Einstellung der Rotationsgeschwindigkeit der Kühlwalze unabhängig von der Bahngeschwindigkeit. In einer besonders bevorzugten Ausführungsform ist die Rotationsgeschwindigkeit der Kühlwalze daher im Vergleich zur Bahngeschwindigkeit höher oder niedriger. In einer besonders bevorzugten Ausführungsform rotiert die Kühlwalze mit 90 bis 110% der Bahngeschwindigkeit.

In einer bevorzugten Ausführungsform der erfindungsgemäßen Vorrichtung weist die Kühlwalze Mittel zur Aufnahme eines Kühlmittels auf. Das Kühlmittel kann gemäß den jeweiligen Temperaturanforderungen gewählt werden. Besonders bevorzugt handelt es sich bei dem Kühlmittel um Wasser.

Ein weiterer Gegenstand der vorliegenden Erfindung ist ein Verbundkörper, der mittels des erfindungsgemäßen Verfahrens oder unter Verwendung der erfindungsgemäßen Vorrichtung erhalten wird. Vorzugsweise handelt es sich bei dem Verbundkörper um eine mehrschichtige, flexible Folie. In einer besonders bevorzugten Ausführungsform ist das erste Substrat eine flexible thermoplastische Kunststofffolie und das zweite Substrat ausgewählt aus der Gruppe bestehend aus Papier, Metall, Kunststoff oder Mehrschichtsubstraten. In einer bevorzugten Ausführungsform handelt es sich bei dem Verbundkörper um einen Verbundkörper, bei dem es sich bei dem ersten Substrat um Polypropylen oder Polyethylen und bei dem zweiten Substrat um ein folienförmiges Substrat auf Basis von Aluminium oder Kunststoff, insbesondere orientiertem Polypropylen oder orientiertem Polyethylen, handelt, die mit einem Klebstoff auf Basis von Polyurethanen verbunden sind. Die vorliegende Erfindung wird anhand der bereitgestellten Figuren näher erläutert, wobei diese nicht als Einschränkung des Erfindungsgedankens zu verstehen sind.

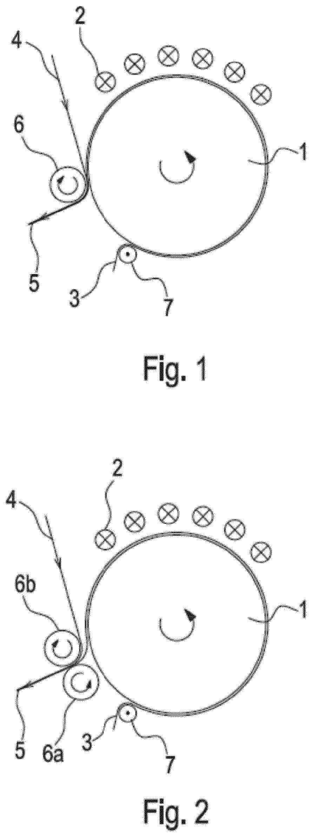

Figur 1 zeigt eine Ausführungsform, bei der die Kühlwalze als Teil des Mittels zum Zusammenführen des ersten und des zweiten Substrats ausgebildet ist. Das erste Substrat (3) wird um eine rotierend angetriebene Kühlwalze (1) geführt und steht mit dieser in Kontakt. Zu diesem Zweck kann die Vorrichtung eine oder mehrere weitere Walzen (7) aufweisen, die das erste Substrat an die Kühlwalze pressen. Das erste Substrat wird an den um die Kühlwalze (1) angeordneten Heizelementen (2) derart vorbeigeführt, dass die thermoplastische Oberfläche des ersten Substrats (3) den Heizelementen (2) zugewandt ist, wobei die thermoplastische Oberfläche des ersten Substrats (3) in einen erweichten Zustand überführt wird. Die erweichte Oberfläche des ersten Substrats (3) wird derart mit einem zweiten Substrat (4) zusammengeführt, dass sich der auf der Oberfläche des zweiten Substrats (4) befindliche Klebstoff zwischen dem ersten Substrat (3) und dem zweiten Substrat (4) befindet. Dazu werden das erste Substrat und das zweite Substrat an einer Walze (6) vorbeigeführt, die gegenläufig zur Kühlwalze (1) rotiert und die das zweite Substrat (4) gegen das auf der Kühlwalze (1) aufliegenden erste Substrat (3) presst. Nach Durchlaufen der Walze (6) kann das laminierte Produkt (5) einer Aufwickelanlage zugeführt werden.

Figur 2 zeigt eine Ausführungsform der erfindungsgemäßen Vorrichtung, bei der das Mittel zum Zusammenführen des ersten Substrats und des zweiten Substrats unabhängig von der Kühlwalze ausgebildet ist. Das erste Substrat (3) wird um eine rotierend angetriebene Kühlwalze (1) geführt und steht mit dieser in Kontakt. Zu diesem Zweck kann die Vorrichtung eine oder mehrere weitere Walzen (7) aufweisen, die das erste Substrat an die Kühlwalze pressen. Das erste Substrat (3) wird an den um die Kühlwalze (1) angeordneten Heizelementen (2) derart vorbeigeführt, dass die thermoplastische Oberfläche des ersten Substrats (3) den Heizelementen (2) zugewandt ist, wobei die thermoplastische Oberfläche des ersten Substrats (3) in einen erweichten Zustand überführt wird. Die erweichte Oberfläche des ersten Substrats (3) wird derart mit einem zweiten Substrat (4) zusammengeführt, dass sich der auf der Oberfläche des zweiten Substrats (4) befindliche Klebstoff zwischen dem ersten Substrat (3) und dem zweiten Substrat (4) befindet. Dazu werden das erste Substrat (3) und das zweite Substrat (4) durch eine Walzengruppe (6a, 6b) geführt, die zueinander gegenläufig laufende Walzen aufweist und das zweite Substrat (4) gegen das erste Substrat (3) presst. Nach Durchlaufen der Walzengruppe (6a, 6b) kann das laminierte Produkt (5) einer Aufwickelanlage zugeführt werden.

## Patentansprüche

1. Verfahren zum Verkleben von Substraten umfassend:
Bereitstellen eines folienförmigen ersten Substrats (3) mit einer thermoplastischen Oberfläche;
Führen des ersten Substrats (3) um eine antreibbare Kühlwalze (1), mit der das erste Substrat (3) in Kontakt steht, wobei sich die Kühlwalze in Vorschubrichtung dreht;
Bereitstellen eines zweiten Substrats (4), auf dessen Oberfläche ein Klebstoff aufgetragen ist; und,
Zusammenführen des ersten und des zweiten Substrats unter Druck, wobei sich die thermoplastische Oberfläche des ersten Substrats (3) beim Zusammenführen in einem erweichten Zustand befindet,
wobei die der erweichten Oberfläche gegenüberliegende Oberfläche des ersten Substrats (3) mittels einer rotierenden Kühlwalze (1) gekühlt wird; und,
wobei die thermoplastische Oberfläche des ersten Substrats (3) durch Erwärmen in einen erweichten Zustand überführt wird, wobei das Erwärmen mittels wenigstens eines Heizelements (2) erfolgt, das gegenüberliegend der Kühlwalze (1) angeordnet ist, und
wobei der Abstand zwischen dem wenigstens einen Heizelement (2) und der Kühlwalze (1) variabel ist.

2. Verfahren nach Anspruch 1, wobei es sich bei dem mindestens einen Heizelement (2) um ein Infrarot (IR)-Heizelement handelt.

3. Verfahren nach einem oder mehrerer der Ansprüche 1 oder 2, **dadurch gekennzeichnet, dass** das Schichtgewicht des Klebstoffs auf dem zweiten Substrat (4) weniger als 2 g/m², vorzugsweise weniger als 1 g/m² beträgt.

4. Verfahren nach einem oder mehrerer der vorangehenden Ansprüche, **dadurch gekennzeichnet, dass** der auf dem zweiten Substrat (4) aufgetragene Klebstoff ausgewählt ist aus thermoplastischen Klebstoffen oder vernetzenden Klebstoffen in lösemittelhaltiger, wässriger oder lösemittelfreier Form.

5. Verfahren nach einem oder mehrerer der vorangehenden Ansprüche, **dadurch gekennzeichnet, dass** es sich bei dem ersten Substrat (3) um ein Substrat bestehend aus oder umfassend Polyolefine, Polyvinylchloride, Ethylencopolymere, Polyester, Polyamide und/oder Polyether handelt.

6. Verfahren nach einem oder mehrerer der vorangehenden Ansprüche, **dadurch gekennzeichnet, dass** es sich bei dem zweiten Substrat (4) um ein folienförmiges Substrat handelt, das vorzugsweise ausgewählt ist aus der Gruppe bestehend aus duroplastischen und thermoplastischen Kunststoffen, organischen Polymeren und Metallen und Metalllegierungen.

7. Vorrichtung zur Durchführung eines Verfahrens nach einem oder mehrerer der Ansprüche 1 bis 6, **dadurch gekennzeichnet, dass** die Vorrichtung folgendes aufweist:
- eine Zuführeinrichtung für ein folienförmiges erstes Substrat (3), wobei das Substrat eine thermoplastische Oberfläche aufweist,
- eine Zuführeinrichtung für ein zweites Substrat (4), auf dessen Oberfläche ein Klebstoff aufgebracht ist,
- eine rotierend antreibbare Kühlwalze (1), die mit dem ersten Substrat (3) in Kontakt steht und um die das erste Substrat geführt wird;
- wenigstens ein Heizelement (2) zum Erwärmen der thermoplastischen Oberfläche des ersten Substrats (3), wobei das wenigstens eine Heizelement (2) gegenüberliegend der Kühlwalze (1) angeordnet ist und
- Mittel zum Zusammenführen (6) des ersten und des zweiten Substrats (3,4),
wobei der Abstand zwischen dem wenigstens einen Heizelement (2) und der Kühlwalze (1) variabel ist.

8. Vorrichtung nach einem oder mehrerer der Ansprüche 7, **dadurch gekennzeichnet, dass** die Kühlwalze (1) Teil des Mittels zum Zusammenführen (6) des ersten und des zweiten Substrats (3, 4) bildet und das Mittel (6) weiterhin über ein oder mehrere Walzen zum Anpressen des zweiten Substrats gegen das auf der Kühlwalze aufliegenden ersten Substrats verfügt.

9. Vorrichtung nach einem oder mehrerer der vorangehenden Ansprüche, **dadurch gekennzeichnet, dass** das Mittel (6) zum Zusammenführen des ersten und des zweiten Substrats von der Kühlwalze (1) unabhängig ausgebildet ist und das Mittel über ein oder mehrere Walzen (6a, 6b) zum Zusammenführen des ersten und des zweiten Substrats verfügt.

10. Vorrichtung nach Anspruch 9, **dadurch gekennzeichnet, dass** das Mittel zum Zusammenführen (6) des ersten und des zweiten Substrats in Prozessrichtung hinter der Kühlwalze (1) angeordnet, wobei das Mittel vorzugsweise von der Kühlwalze (1) beabstandet angeordnet ist.

11. Vorrichtung nach einem oder mehrerer der Ansprüche 9 oder 10, **dadurch gekennzeichnet, dass** die Rotationsgeschwindigkeit der Kühlwalze (1) im Vergleich zur Bahngeschwindigkeit höher oder niedriger ist.

12. Vorrichtung nach einem oder mehrerer der vorangehenden Ansprüche, **dadurch gekennzeichnet, dass** die Kühlwalze (1) Mittel zu Aufnahme eines Kühlmittels aufweist, wobei es sich bei dem Kühlmittel vorzugsweise um Wasser handelt.

## Claims

1. A method for bonding substrates, comprising:
providing a first substrate (3) in film form, which substrate has a thermoplastic surface;
guiding the first substrate (3) around a drivable cooling roller (1) with which the first substrate (3) is in contact, wherein the cooling roller rotates in the feed direction;
providing a second substrate (4), on the surface of which an adhesive is applied; and,
joining the first and the second substrate under pressure, wherein the thermoplastic surface of the first substrate (3) is in a softened state during the joining process, wherein the surface of the first substrate (3) opposite the softened surface is cooled by means of a rotating cooling roller (1); and,
wherein the thermoplastic surface of the first substrate (3) is converted into a softened state by heating, wherein the heating is carried out by means of at least one heating element (2) which is arranged opposite the cooling roller (1), and wherein
the distance between the at least one heating element (2) and the cooling roller (1) is variable.

2. The method according to claim 1, wherein the at least one heating element (2) is an infrared (IR) heating element.

3. The method according to one or more of claims 1 or 2,
**characterized in that** the layer weight of the adhesive on the second substrate (4) is less than 2 g/m², preferably less than 1 g/m².

4. The method according to one or more of the preceding claims, **characterized in that** the adhesive applied to the second substrate (4) is selected from thermoplastic adhesives or crosslinking adhesives in solvent-containing, aqueous or solvent-free form.

5. The method according to one or more of the preceding claims, **characterized in that** the first substrate (3) is a substrate consisting of or comprising polyolefins, polyvinyl chlorides, ethylene copolymers, polyesters, polyamides and/or polyethers.

6. The method according to one or more of the preceding claims, **characterized in that** the second substrate (4) is a substrate in film form which is preferably selected from the group consisting of thermosetting and thermoplastic plastics materials, organic polymers and metals and metal alloys.

7. An apparatus for carrying out a method according to one or more of claims 1 to 6, **characterized in that** the apparatus comprises the following:
- a feed device for a first substrate (3) in film form, the substrate having a thermoplastic surface,
- a feed device for a second substrate (4), on the surface of which an adhesive is applied,
- a rotatably drivable cooling roller (1) which is in contact with the first substrate (3) and around which the first substrate is guided;
- at least one heating element (2) for heating the thermoplastic surface of the first substrate (3), the at least one heating element (2) being arranged opposite the cooling roller (1), and
- means for joining (6) the first and the second substrate (3, 4),
the distance between the at least one heating element (2) and the cooling roller (1) being variable.

8. The apparatus according to one or more of claims 7,
**characterized in that** the cooling roller (1) forms part of the means for joining (6) the first and the second substrate (3, 4), and the means (6) also has one or more rollers for pressing the second substrate against the first substrate resting on the cooling roller.

9. The apparatus according to one or more of the preceding claims, **characterized in that** the means (6) for joining the first and the second substrate is formed independently of the cooling roller (1), and the means has one or more rollers (6a, 6b) for joining the first and the second substrate.

10. The apparatus according to claim 9, **characterized in that** the means for joining (6) the first and the second substrate is arranged behind the cooling roller (1) in the process direction, the means preferably being arranged at a distance from the cooling roller (1).

11. The apparatus according to one or more of claims 9 or 10, **characterized in that** the rotational speed of the cooling roller (1) is higher or lower in comparison with the web speed.

12. The apparatus according to one or more of the preceding claims, **characterized in that** the cooling roller (1) has means for receiving a coolant, the coolant preferably being water.

## Revendications

1. Procédé pour le collage de substrats comprenant :
la fourniture d'un premier substrat (3) en forme de film comportant une surface thermoplastique ;
le guidage du premier substrat (3) autour d'un rouleau de refroidissement (1) pouvant être entraîné avec lequel le premier substrat (3) est en contact, dans lequel le rouleau de refroidissement tourne dans le sens d'avance ;
la fourniture d'un second substrat (4) sur la surface duquel un adhésif est appliqué ; et
l'assemblage du premier et du second substrat sous pression, dans lequel la surface thermoplastique du premier substrat (3) se trouve dans un état ramolli lors de l'assemblage, dans lequel la surface du premier substrat (3) opposée à la surface ramollie est refroidie au moyen d'un rouleau de refroidissement (1) rotatif ; et
dans lequel la surface thermoplastique du premier substrat (3) est amenée dans un état ramolli par chauffage, dans lequel le chauffage est effectué au moyen d'au moins un élément chauffant (2) qui est disposé à l'opposé du rouleau de refroidissement (1), et dans lequel
la distance entre l'au moins un élément chauffant (2) et le rouleau de refroidissement (1) est variable.

2. Procédé selon la revendication 1, dans lequel l'au moins un élément chauffant (2) est un élément chauffant à infrarouge (IR).

3. Procédé selon l'une ou plusieurs des revendications 1 ou 2, **caractérisé en ce que** le poids de la couche d'adhésif sur le second substrat (4) est inférieur à 2 g/m², de préférence inférieur à 1 g/m².

4. Procédé selon l'une ou plusieurs des revendications précédentes, **caractérisé en ce que** l'adhésif appliqué sur le second substrat (4) est choisi parmi adhésifs thermoplastiques ou adhésifs réticulants sous forme aqueuse, contenant du solvant ou sans solvant.

5. Procédé selon l'une ou plusieurs des revendications précédentes, **caractérisé en ce que** le premier substrat (3) est un substrat constitué de polyoléfines, chlorures de polyvinyle, copolymères d'éthylène, polyesters, polyamides et/ou polyéthers ou comprenant ceux-ci.

6. Procédé selon l'une ou plusieurs des revendications précédentes, **caractérisé en ce que** le second substrat (4) est un substrat en forme de film qui est de préférence choisi dans le groupe constitué de matières plastiques thermodurcissables et thermoplastiques, polymères organiques et métaux et alliages de métaux.

7. Dispositif pour la mise en œuvre d'un procédé selon l'une ou plusieurs des revendications 1 à 6, **caractérisé en ce que** le dispositif présente les éléments suivants :
- un appareil d'alimentation pour un premier substrat (3) en forme de film, dans lequel le substrat présente une surface thermoplastique,
- un appareil d'alimentation pour un second substrat (4), sur la surface duquel est appliqué un adhésif,
- un rouleau de refroidissement (1) pouvant être entraîné en rotation qui est en contact avec le premier substrat (3) et autour duquel le premier substrat est guidé ;
- au moins un élément chauffant (2) pour le chauffage de la surface thermoplastique du premier substrat (3), dans lequel l'au moins un élément chauffant (2) est disposé à l'opposé du rouleau de refroidissement (1) et
- un moyen pour l'assemblage (6) du premier et du second substrat (3, 4),
dans lequel la distance entre l'au moins un élément chauffant (2) et le rouleau de refroidissement (1) est variable.

8. Dispositif selon l'une ou plusieurs des revendications 7, **caractérisé en ce que** le rouleau de refroidissement (1) forme une partie du moyen pour l'assemblage (6) du premier et du second substrat (3, 4) et le moyen (6) dispose en outre d'un ou de plusieurs rouleaux permettant de presser le second substrat contre le premier substrat reposant sur le rouleau de refroidissement.

9. Dispositif selon l'une ou plusieurs des revendications précédentes, **caractérisé en ce que** le moyen (6) pour l'assemblage du premier et du second substrat est réalisé indépendamment du rouleau de refroidissement (1) et le moyen dispose d'un ou de plusieurs rouleaux (6a, 6b) pour l'assemblage du premier et du second substrat.

10. Dispositif selon la revendication 9, **caractérisé en ce que** le moyen pour l'assemblage (6) du premier et du second substrat est disposé en aval du rouleau de refroidissement (1) dans le sens du processus, dans lequel le moyen est de préférence disposé à distance du rouleau de refroidissement (1).

11. Dispositif selon l'une ou plusieurs des revendications 9 ou 10, **caractérisé en ce que** la vitesse de rotation du rouleau de refroidissement (1) est supérieure ou inférieure à la vitesse de bande.

12. Dispositif selon l'une ou plusieurs des revendications précédentes, **caractérisé en ce que** le rouleau de refroidissement (1) présente un moyen pour la réception d'un agent de refroidissement, dans lequel l'agent de refroidissement est de préférence de l'eau.
